# EUROPEAN PATENT APPLICATION

(11) **EP 4 718 315 A1**
(43) Date of publication of application: **01.04.2026**
(21) Application number: 24383027.0
(22) Date of filing: 25.09.2024
(51) Int. Cl.: G06K 19/077, B42D 25/00

(54) **CHIP CARD HAVING AN EXTERNAL PROTECTION**

(71) Applicant: Giesecke+Devrient ePayments GmbH, 81677 München (DE)
(72) Inventor: REDONDO, Gemma, 08820 El Prat de Llobregat (Barcelona) (ES); SEGURA, Maria, 08820 El Prat de Llobregat (Barcelona) (ES); BRULL, Carla, 08820 El Prat de Llobregat (Barcelona) (ES)
(74) Representative: LKGLOBAL Partnerschaftsgesellschaft mbB

(57) **Abstract**

The present invention relates to a method for producing a chip card (2) having a design (6), whereby the chip card (2) has a protection layer protecting the design (6), whereby the method comprises the following steps of providing a card body (4), providing a design (6) on at least one side of the card body (4), applying a varnish layer (8) on at least the side of the card body (4) having the design (6), whereby the varnish layer (8) is the protection layer. Further, the present invention relates to an according chip card (2).

## Description

The present invention relates to chip cards in general and in particular to a method for producing chip cards having an external protection.

### BACKGROUND OF THE INVENTION

Chip cards are widely used in a variety of systems such as payment cards, access cards, identity cards to provide identification, authentication, data storage and application processing.

A usual construction of a chip card comprises at least one core foil layer, e.g. two white opaque core foil layers. The first opaque core foil layer comprises a design printing on one side which can be seen externally on a first external surface of the chip card. The design printing discloses e.g. a symbol and different colors of a provider of the smart card, e.g. a financial institute, a bank, etc. in combination with further information, e.g. the name of the user of the chip card. The second opaque core foil layer comprises e.g. a magnetic stripe and a signature panel to be signed by the user of the smart card which can be seen externally on a second external surface of the chip card. A transparent overlay foil layer is provided as well on the first as on the second opaque core foil layer of the smart card as a protection against an external influence, e.g. a protection against scratches. The first and the second core foils and the transparent overlay foil layers are laminated under heat and pressure to produce the chip card. The chip card comprises further a chip which is connected with e.g. an external contact interface and/or an antenna for transfer of energy and data between an external terminal and the chip of the chip card. Chip cards are produced in many formats. An example for a quite common format is the so called ID-1 format according to the standard ISO/IEC 7810.

A problem is that during the use of the chip card a delamination may occur e.g. between the transparent overlay foil layer and the first opaque core foil layer having the design printing, whereby the delamination may start e.g. in the corners or edges of the chip card. The reasons for the delamination of the transparent overlay foil layer are for example adverse conditions of use of the chip card, e.g. a mechanical stress at the corners or edges of the chip card. Other reasons for delamination are for example problems during graphic personalization of the chip card, e.g. embossing, indents, etc., which may cause an internal overlay plastic layer delamination. A complete delamination of the transparent overlay foil layer may cause a removal of graphical personalization data. To avoid the delamination an adhesive is applied between the transparent overlay foil layers and the opaque core foil layers. The use of the adhesive increases the production costs and the complexity of the production as the adhesive has to be compatible with the lamination procedure and the used materials of the foil layers. Also the logistic has to be adapted accordingly. Further, even the adhesive is not able to inhibit the delamination.

It is therefore desirable to provide a solution for the problem of the delamination which addresses the above mentioned drawbacks.

### SUMMARY OF THE INVENTION

The present invention addresses the above object by the subject-matter covered by the independent claims. Preferred embodiments of the invention are defined in the dependent claims.

To solve the problems of the state of the art the present invention proposes a method for producing a chip card having a design, whereby the chip card has a protection layer protecting the design. The method comprises the step of providing a card body as a first step. Afterwards a design is provided on at least one side of the card body, e.g. by a printing method, e.g. by Drop on Demand, laser printing or any other appropriate printing method. Following a varnish layer is applied on at least the side of the card body having the design, whereby the varnish layer is the protection layer of the design. At the end the composition comprising the card body having the design and the varnish layer becomes the chip card.

There are a several different production methods of chip cards. One example is the production of chip cards by using a sheet material. A number of chip cards are produced for example in one sheet, whereby the single chip cards are separated by punching out the single chip cards.

The advantage of the invention is that a chip card is produced which comprises a varnish layer as a protective layer on the card body, which can easily be applied on the card body during, e.g. before lamination, or at end of the production process, e.g. after finishing a card body made of wood. One of the essential advantage is that the varnish layer is compatible with the lamination process. No adhesive is necessary to combine the varnish layer as the protective layer with the chip card body. In addition this reduces the costs, duration and complexity of the production and the logistics to create a chip card having a varnish layer as protective layer.

An advantageous embodiment of the invention is that an element is positioned on the varnish layer of the card body and connected irreversibly with the varnish layer.

The advantage is that the varnish layer is not only compatible with the above mentioned lamination process but also with a process to position and connect external elements with the varnish layer.

A further advantageous embodiment of the invention is that the element is connected by a hot stamping method. This has the advantage that the varnish layer is compatible with the hot stamping method. Any other appropriate methods may be used to connect an element with the varnish layer.

A further advantageous embodiment of the invention is that the element is a magnetic stripe, a hologram and/or a signature panel. Any other appropriate element may be used to be connected with the varnish layer.

A further advantageous embodiment of the invention is that the chip card is personalized by using a laser and/or an embossing. If a laser is used to personalize the chip card, it is advantageous to add laserable particles in the varnish. Any other appropriate method to personalize the chip card may be used, e.g. indent, thermal printing or any other appropriate method.

A further advantageous embodiment of the invention is that the varnish layer is applied on the card body by a printing process e.g. silk screen, dry and wet offset, and/or by a spraying process. Any other appropriate method to apply the varnish may be used.

A further advantageous embodiment of the invention is that the varnish is a transparent thermoplastic varnish. The advantage of the thermoplastic varnish is that it is compatible to be in direct contact with a lamination plate and with for example the hot stamping element. Further the transparence of the varnish enables that e.g. the design of the card body is visible from external by e.g. a user of the chip card.

A further advantageous embodiment of the invention is that the card body comprises at least one layer. The advantage is that the card body comprises more than one layer, e.g. two layers, to create e.g. a special technical characteristic in regard of elasticity.

A further advantageous embodiment of the invention is that the at least one layer is made of at least one material. The advantage is that the layer may comprise one material or more than one material, e.g. PVC and PE or plastic and metal, to realize any desired special technical characteristic. Beside plastic and metal further examples for possible materials are ceramic and wood. Any other appropriate material and/or combination of different materials may be used.

A further advantageous embodiment of the invention is that the chip card comprises a chip which is electrically connected with a contact module and/or an antenna. The advantage is that energy and data may be transferred between the chip and an external terminal.

A further advantageous embodiment of the invention is that the card body is milled to create a recess to insert a chip module into the recess. The advantage is that the varnish layer is not only compatible with e.g. lamination but also with a mechanical processing of the chip card body. Any other appropriate mechanical processing is possible.

A further advantageous embodiment of the invention is that the varnish layer is applied on the card body during or at the end of the method for producing the chip card. This means for example that the varnish may be applied before lamination of the card body. If the card body is for example made of wood, then the varnish may be applied on the card body at the end of the producing of the chip card. This means that the varnish layer may be applied at any appropriate step of the method for producing the chip card.

Beside the above discussed method the invention proposes also a chip card having a design, whereby the chip card has a protection layer protecting the design, whereby the chip card has been manufactured according to the above mentioned method.

The aspects and embodiments described herein will allow chip card producers to effectively and efficiently produce chip cards having a protective layer according to the invention.

Further aspects, features and advantages of the present invention will become apparent to those of ordinary skills in the art upon reviewing the following detailed description of a preferred embodiment of the present invention in conjunction with the accompanying figure.

### BRIEF DESCRIPTION OF THE DRAWING

### Reference will now be made to the accompanying figure, in which

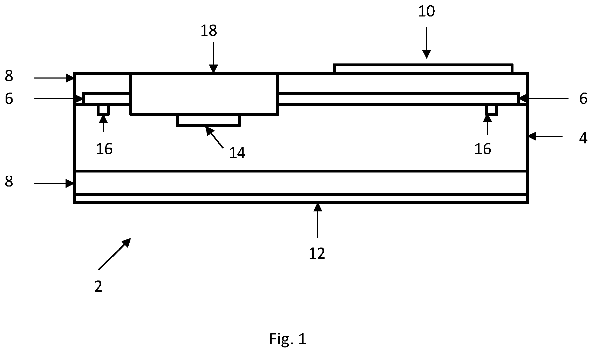

FIG. 1 shows an embodiment of the present invention of a chip card having a varnish as a protective layer.

### DETAILED DESCRIPTION

Detailed explanations of the present invention are given below with reference to the attached drawing that illustrate a specific embodiment example of the present invention. This embodiment is described in sufficient detail to enable those skilled in the art to practice the invention. It is to be understood that the various embodiments of the present invention, although different, are not necessarily mutually exclusive. For example, a particular feature, structure, or characteristic described herein in connection with one embodiment may be implemented within other embodiments without departing from the scope of the present invention. In addition, it is to be understood that the position or arrangement of individual elements within each disclosed embodiment may be modified without departing from the scope of the present invention. The following detailed description is, therefore, not to be taken in a limiting sense, and the scope of the present invention is defined only by the appended claims, appropriately interpreted, along with the full range of equivalents to which the claims are entitled. In the drawings, like numerals refer to the same or similar functionality throughout the several views.

Fig. 1 shows an embodiment of the present invention of a chip card 2 having a varnish layer 8 as a protective layer which is produced by the method of the present invention.

The method for producing a chip card 2 having a design according to the present invention starts with the provision of a card body 4. A design 6 is provided on at least one side of the card body 4. The design is provided by for example a printing method e.g. Drop on Demand, abbreviated with DoD, laser printing or any other appropriate method. After applying the design 6 a varnish layer 8 is applied on at least one side of the card body 4 having the design 6. The varnish layer 8 is the protective layer of the design e.g. against scratches. In general, the varnish layer 8 is applied on the card body 4 during or at the end of the method of producing the chip card 2, e.g. before lamination. Alternatively, the varnish layer 8 may be applied after the chip card 2 has been produced, e.g. in case of producing a card body made of wood.

Once varnish is applied an element, e.g. a hologram 10, is positioned on the varnish layer 8 on the same side of the card body 4 having the design. On the opposing side of the card body 4 another element, e.g. a signature panel 12 is applied on the varnish layer 8. In general it is possible that on each side of the card body more than one elements are positioned, e.g. the signature panel 12 and a further hologram. Both elements, i.e. the hologram 10 and the signature panel 12 are connected irreversibly with the varnish layer 8 by a hot stamping method or any other appropriate method.

Any other element may be used beside the hologram 10 and the signature panel 12. A magnetic stripe is a further example for an element which could also be connected with the varnish layer 8.

This shows again the advantage of the invention that the varnish layer 8 is compatible with the lamination method and the hot stamping method or any other appropriate method to produce a chip card 2.

Preferably, at the very end of the production process after card body lamination a recess is created in the card body 4 to insert a chip 14 and a contact module 18 into the card body 4 and to connect the chip 14 with the antenna 16.

To personalize the chip card 2 further information are provided on the surface of the chip card 2. These information are for example the name of the user of the chip card 2, an according bank account number, etc. The information to personalize the chip card 2 are applied by e.g. a laser and/or an embossing. Again, the varnish layer 8 is also compatible with the used personalization methods.

The varnish layer 8 is applied on the card body 4 by an appropriate printing process, e.g. silk screen, dry and wet offset, or by a spraying process, whereby any other appropriate method may be used.

The varnish layer 8 is preferably a transparent thermoplastic varnish. The thermoplastic varnish is compatible to be in direct contact with a lamination plate and with a hot stamping element. A transparent varnish is advisable that e.g. a user of the chip card is able to see the design 6.

The card body 4 may comprise at least one layer. In a preferred embodiment the card body 4 may comprise more than one layer e.g. to create a specific desired mechanic characteristic.

Further, each layer of the card body 4 may be made of at least one material. Any appropriate material is possible, e.g. plastic, metal, ceramic, wood, etc. The creation of specific mechanic characteristic can be supported by the choice of the used materials. A single layer may made of at least one material.

As mentioned before, preferably at the very end of the production process a recess is created in the card body 4 to insert a chip 14 into the card body 4 and to connect electrically the chip 14 with a antenna 16 and/or a contact module 18. A person skilled in the art is quite aware of the necessary production method steps to incorporate the chip 14, the contact module 16 and/or the antenna 18 in the chip card body 2 during a production of the chip card 2. Therefore, these method steps are well known in the state of the art and are only quite generally mentioned for the sake of completeness.

Nevertheless it should be mentioned that the varnish layer 8 is compatible with mechanical methods, e.g. milling, to create a recess to insert a chip module in the chip card 2.

The person skilled in the art will notice that the above mentioned description of the present invention has the sole purpose to explain a possible embodiment. Any other possible and appropriate embodiments which are in the focus of the invention are not excluded by the above mentioned description.

### Reference numbers

- 2: Chip card
- 4: Card body
- 6: Design
- 8: Varnish layer
- 10: Hologram
- 12: Signature Panel
- 14: Chip
- 16: Antenna
- 18: Contact module

## Claims

1. Method for producing a chip card (2) having a design (6),
whereby the chip card (2) has a protection layer protecting the design,
whereby the method comprises the following steps:
- providing a card body (4),
- providing a design (6) on at least one side of the card body (4),
- applying a varnish layer (8) on at least the side of the card body(4) having the design (6), whereby the varnish layer (8) is the protection layer.

2. Method according to claim 1, **characterized in that** once the varnish layer (8) is applied on the card body (4) an element (10, 12) is positioned on the varnish layer (8) of the card body (4) and connected irreversibly with the varnish layer (8).

3. Method according to claim 2, **characterized in that** the element (10, 12) is connected by a hot stamping method.

4. Method according to claim 3, **characterized in that** the element (10, 12) is a magnetic stripe, a hologram and/or a signature panel.

5. Method according to claims 1 to 4, **characterized in that** the chip card (2) is personalized by using a laser and/or an embossing.

6. Method according to claims 1 to 5, **characterized in that** the varnish layer (8) is applied on the card body (4) by a printing process or by a spraying process.

7. Method according to claims 1 to 6, **characterized in that** the varnish is a transparent thermoplastic varnish.

8. Method according to claim 1 to 7, **characterized in that** the card body (4) comprises at least one layer.

9. Method according to claims 1 to 8, **characterized in that** the at least one layer is made of at least one material.

10. Method according to claims 1 to 9, **characterized in that** the chip card (2) comprises a chip (14) which is electrically connected with a contact module (18) and/or an antenna (16).

11. Method according to claims 1 to 10, **characterized in that** the card body (4) is milled to create a recess to insert a chip module into the recess.

12. Method according to claims 1 to 11, **characterized in that** the varnish layer (8) is applied on the card body (4) during or at the end of the method for producing the chip card (2).

13. Chip card (2) having a design (6), whereby the chip card (2) has a protection layer (8) protecting the design (6), whereby the chip card (2) has been manufactured according to the above mentioned claims 1 to 12.

## Amended claims

### Amended claims in accordance with Rule 137(2) EPC.

1. Method for producing a chip card (2) having a design (6),
whereby the chip card (2) has a protection layer protecting the design, whereby the method comprises the following steps:
- providing a card body (4),
- providing a design (6) on at least one side of the card body (4),
- applying a varnish layer (8) on at least the side of the card body (4) having the design (6), whereby the varnish layer (8) is the protection layer;
**characterized in that** once the varnish layer (8) is applied on the card body (4) an element (10, 12) is positioned on the varnish layer (8) of the card body (4) and connected irreversibly with the varnish layer (8).

2. Method according to claim 1, **characterized in that** the element (10, 12) is connected by a hot stamping method.

3. Method according to claim 2, **characterized in that** the element (10, 12) is a magnetic stripe, a hologram and/or a signature panel.

4. Method according to claims 1 to 3, **characterized in that** the chip card (2) is personalized by using a laser and/or embossing.

5. Method according to claims 1 to 4, **characterized in that** the varnish layer (8) is applied on the card body (4) by a printing process or by a spraying process.

6. Method according to claims 1 to 5, **characterized in that** the varnish is a transparent thermoplastic varnish.

7. Method according to claim 1 to 6, **characterized in that** the card body (4) comprises at least one layer.

8. Method according to claims 1 to 7, **characterized in that** the at least one layer is made of at least one material.

9. Method according to claims 1 to 8, **characterized in that** the chip card (2) comprises a chip (14) which is electrically connected with a contact module (18) and/or an antenna (16).

10. Method according to claims 1 to 9, **characterized in that** the card body (4) is milled to create a recess to insert a chip module into the recess.

11. Method according to claims 1 to 10, **characterized in that** the varnish layer (8) is applied on the card body (4) during or at the end of the method for producing the chip card (2).

12. Chip card (2) having a design (6), whereby the chip card (2) has a protection layer (8) protecting the design (6), whereby the chip card (2) has been manufactured according to the above mentioned claims 1 to 11.
